# EUROPEAN PATENT APPLICATION

(11) **EP 1 621 583 A1**
(43) Date of publication of application: **01.02.2006**
(21) Application number: 05011021.2
(22) Date of filing: 20.05.2005
(51) Int. Cl.: C08L 79/08, C08J 5/18, C08K 5/49

(54) **Flame-retardant halogen-free polyimide films useful as thermal insulation in aircraft applications and methods relating thereto**

(30) Priority: 26.07.2004 US 899460
(71) Applicant: E.I. DU PONT DE NEMOURS AND COMPANY, Wilmington, DE 19898 (US)
(72) Inventor: Kuppsuamy, Kanakarajan, Dublin, Ohio 43017 (US)
(74) Representative: Towler, Philip Dean

(57) **Abstract**

Flame-retardant, thin gauge polyimide films are disclosed which are generally useful in lightweight, aircraft thermal insulation, or similar type applications. These films contain additives having a nitrogen-containing condensed phosphoric acid compound where the additive component is present in a thin polyimide dry film at a weight ratio of about 3 to 15 weight percent. The thickness of these flame-retarding, thin polyimide films is between 8 and 45 microns. These films have a flame retardancy rating that meets or exceeds national standards according either UL 94 Thin Material Vertical Burning Test 94VTM-0, UL 94 Thin Material Vertical Burning Test 94VTM-1 or UL 94 Thin Material Vertical Burning Test 94VTM-2.

## Description

### FIELD OF THE INVENTION

The present invention is directed to halogen-free, flame-retardant polyimide films having a thickness from about 8 to 45 microns, the film being useful in thermal insulation applications for aircraft and similar-type applications. More specifically, the thin polyimide films of the present invention comprise a flame-retardant additive material having a nitrogen-containing condensed phosphoric acid compound. The flame-retardant additive is present, in the polyimide base matrix, at a weight ratio of about three to 15 weight percent.

### BACKGROUND OF THE INVENTION

Nitrogen-containing condensed phosphoric acid compounds, particularly, melamine polyphosphoric acid, are known to improve flame retardance properties of polymers and epoxies. These materials are often used commercially in epoxies, adhesives, plastics and the like as flame-retardant additives for flame resistant applications.

U.S. Pat. No. 5,430,081 to Ohmae teaches improved flame-retardance using a formulation comprising nitrogen-containing condensed phosphoric acid compounds "along with comb-like polymers consisting of polyethylene as the main chain and polyoxyalkylene as a side chain" along with "metal-containing compounds".

U.S. Pat. No. 6,054,515 to Blount teaches the use of flame-retardant salt made though a reaction of an organic phosphorous compound with an inorganic phosphorous compound. The thermoplastic resins are made less flammable by melt-kneading the more flammable resin with the salt, and other component, to make a flame-retardant resin composition.

Numerous flame-retardant base matrix resins (including polyimides) have been considered for use in many flame-retardant applications as unfilled films (i.e. films containing no filler or flame-retardant additives). However, as lightweight thermal insulation (i.e. a thin film with low weight) unfilled-polyimides are not as flame-retardant, especially at thinner gauges (e.g. films having a thickness of less than 50 microns, or as low as 10 microns). In less than optimum polyimide film formulations, halogen-containing flame-retardant coatings are used to coat the film to improve the flame resistance properties of the film. However, aircraft designers desire non-halogen-containing materials to be used as fuselage thermal insulation so that halogen gases are not formed during combustion or exposure to heat.

In the present invention, a non-halogen containing, flame-retardant, thin-gauge, polyimide film has been formed. Manufacturers of thermal insulation (especially aircraft designers) may use the film as a replacement for either non flame-retardant films or flame-retardant films having halogen-containing coatings or additive contained therein.

### SUMMARY OF THE INVENTION

The present invention is directed towards flame-retardant thin-gauge polyimide films useful as thermal insulation in aircraft applications, these films comprising at least 85, 90, 91, 92, 93, 94, 95, 96, or 97 weight percent polyimide and at least 3, 4, 5, 6, 7, 8, 9, 10, 11, 12, 13, 14, or 15 weight percent flame-retardant additive material having a nitrogen-containing condensed phosphoric acid compound.

The polyimide films of the present invention have a thickness within a range between (and including) any two of the following numbers: 8.0, 9.0, 10.0, 12.0, 14.0, 16.0, 18.0, 19.0, 20.0, 22.0, 24.0, 26.0, 28.0, 30.0, 32.0, 34.0, 36.0, 38.0, 40.0, 42.0, 43.0, 44.0, and 45.0 microns.

The films of the present invention have a flame retardancy rating that meets or exceeds national standards according to UL 94 Thin Material Vertical Burning Tests 94VTM-0, 94VTM-1 or 94VTM-2. These filled polyimide films have been found to have extraordinary flame resistance, without unduly harming (and in some instances improving) the mechanical properties of the film. The flame-retardant, high-temperature polyimide films of the present invention can be suitable for thermal insulation systems in aircraft and/or other lightweight applications.

### DETAILED DESCRIPTION OF THE PREFERRED EMBODIMENT(S)

Overview. The compositions of the present invention comprise a high-temperature polyimide matrix and a flame-retardant additive dispersed therein. These components will be described individually, then in combination.

High-Temperature Polyimide Matrices. Useful high-temperature polyimide matrices of the present invention include, as the dominant component (i.e. a component comprising at least 85, 90, 95, 96, or 97 weight percent of the total composite) a thermoplastic or a thermoset polyimide. In one embodiment of the present invention, the polyimide matrix is a thermoplastic or thermoset polyimide film, such as a KAPTON® brand polyimide available from E.I. du Pont de Nemours and Company of Wilmington, DE, USA.

As used herein, the term 'thermoplastic polyimide' is intended to mean a polyimide composition where the glass transition temperature of the base-matrix polyimide material is less than 300, 275, 250 or 225°C. Conversely, as used herein the term 'thermoset polyimide' is intended to include polyimide compositions where the glass transition temperature is greater than or equal to 300, 325, 350, 375 or 400°C or where the polyimide composition does not have a measurable glass transition temperature. 'Thermoset polyimide' may also mean polyimides that are sufficiently cross-linked, regardless of the polymer's glass transition temperature, so that the polymer will not flow.

In one embodiment of the present invention, the polyimide base-matrix is a polyimide synthesized by first forming a polyimide precursor (commonly referred to as a polyamic acid solution) which is created by reacting (in the presence of at least one solvent) one or more dianhydride monomers with one or more diamine monomers.

Ultimately the polyimide precursor (polyamic acid) is converted into a high temperature polyimide material having a solids content of at least 98 to 99.95 weight percent. As long as the flame-retardant additive is ultimately, sufficiently dispersed in a polyamic acid solution, the additive can be first dispersed into a solvent. Generally, the additive can be dispersed prior to, during, or after the polyamic acid solution is created (or at least until polymerization, imidization, solvent removal or other subsequent processing occurs).

In one embodiment of the present invention, the polyamic acid solution is formed from one or more aromatic and/or aliphatic diamine monomers, and one or more aromatic and/or aliphatic dianhydride monomers. In an alternate embodiment the dianhydride and diamine monomers are both aromatic, optionally also including an aliphatic diamine.

Polyamic acid solutions can be converted to high temperature polyimides using processes and techniques commonly known in the art, such as heat and/or conventional polyimide conversion chemistry. Such polyimide manufacturing processes have been practiced for decades, and the amount of public literature on polyimide manufacture is legion and as such is not hence further discussed. In addition, alternative polyimide precursors can be employed. These alternative polyimide precursors (alternatives from the typical dianhydride/diamine combination) include the reaction product of one or more dianhydrides with a diisocyanate derivative of a diamine. In general, any conventional or non-conventional polyimide manufacturing process is appropriate for use in accordance with the present invention. The precursor material should be available in a form having a sufficiently low viscosity to allow the flame-retardant additive of the present invention (as well as other additives) to be dispersed relatively homogeneously.

As used herein, an "aromatic" monomer is either a diamine or a dianhydride monomer having at least one aromatic ring. The ring can be a lone aromatic benzene-type ring or can be a substituted or unsubstituted, functionalized or unfunctionalized benzene-type or similar-type aromatic ring. The aromatic ring may also be connected to another aromatic ring or aliphatic ring.

The term "diamine monomer" as used herein is intended to mean a monomer that reacts with (is complimentary to) a dianhydride monomer to form an intermediate polyamic acid. The polyamic acid is then cured, typically under heat, to form a polyimide.

Depending upon the context, the term diamine monomer can mean (i.) an unreacted monomer (i.e., a diamine monomer); (ii.) a partially reacted monomer (i.e., an oligomer or other polyimide precursor having amine functionality, whereby the precursor is derived in part from diamine monomer) or (iii.) a diamine portion of a fully reacted polymer (the portion or portions of the polyimide attributable to the diamine monomer). The diamine monomer can be functionalized with one or more moieties, depending upon the particular embodiment selected in the practice of the present invention.

Indeed, the term "diamine" is not intended to be limiting (or interpreted literally) as to the number of amine moieties in the diamine monomer. For example, (ii.) and (iii.) above include polyimide materials that may have two, one, or zero amine moieties. Alternatively, the diamine monomer may be functionalized with additional amine moieties (in addition to the amine moieties that react with a dianhydride to provide a polyimide chain). Such additional amine moieties could be used to crosslink the polymer or to provide other functionality to the polymer.

Similarly, the term 'dianhydride monomer' as used herein is intended to mean the monomer that reacts with (is complimentary to) the diamine monomer to form a polyamic acid, and then upon curing with heat and/or radiation, a polyimide.

Depending upon the context it is used, "anhydride" as used herein can mean not only an anhydride moiety *per se,* but also a precursor to an anhydride moiety, such as: (i.) a pair of carboxylic acid groups (which can be converted to anhydride by a dehydration or similar-type reaction); (ii.) an acid-acid ester functionality (or any other functionality presently known or developed in the future which is) capable of conversion to anhydride functionality, or (iii) an acid ester halide.

Depending upon context, "dianhydride" can mean: (i) the unreacted form (i.e., a dianhydride monomer, whether the anhydride functionality is in a true anhydride form or a precursor anhydride form, as discussed in the prior above paragraph); (ii) a partially reacted form (i.e., the portion or portions of an oligomer or other partially reacted or precursor polyimide composition reacted from or otherwise attributable to dianhydride monomer) or (iii) a fully reacted form (the portion or portions of the polyimide derived from or otherwise attributable to dianhydride monomer).

The dianhydride monomer can be functionalized with one or more moieties, depending upon the particular embodiment selected in the practice of the present invention. Indeed, the term "dianhydride" is not intended to be limiting (or interpreted literally) as to the number of anhydride moieties in the dianhydride monomer. For example, (i.), (ii.) and (iii.) (in the paragraph above) include organic substances that may have one or zero anhydride moieties, depending upon whether the anhydride is in a precursor state or a reacted state.

Alternatively, the dianhydride monomer may be functionalized with additional anhydride type moieties (in addition to the anhydride moieties that react with diamine to provide a polyimide). Such additional anhydride moieties could be used to crosslink the polymer or to provide other functionality to the polymer.

Examples of useful dianhydride monomers in the present invention include:
1. pyromellitic dianhydride (PMDA);
2. 3,3',4,4'-biphenyl tetracarboxylic dianhydride (BPDA);
3. 3,3',4,4'-benzophenone tetracarboxylic dianhydride (BTDA);
4. 4,4'-oxydiphthalic anhydride (ODPA);
5. bis(3,4-dicarboxyphenyl) sulfone dianhydride (DSDA);
6. 2,2-bis(3,4-dicarboxyphenyl) 1,1,1,3,3,3,-hexafluoropropane dianhydride (6FDA);
7. 2,2'-bis[4-(3,4-dicarboxyphenoxy)phenyl]propane dianhydride (BPADA);
8. 2,3,6,7-naphthalene tetracarboxylic dianhydride;
9. 1,2,5,6-naphthalene tetracarboxylic dianhydride;
10. 1,4,5,8-naphthalene tetracarboxylic dianhydride;
11. 2,6-dichloronaphthalene-1,4,5,8-tetracarboxylic dianhydride;
12. 2,7-dichloronaphthalene-1,4,5,8-tetracarboxylic dianhydride;
13. 2,3,3',4'-biphenyl tetracarboxylic dianhydride;
14. 2,2',3,3'-biphenyl tetracarboxylic dianhydride;
15. 2,3,3',4'-benzophenone tetracarboxylic dianhydride;
16. 2,2',3,3'-benzophenone tetracarboxylic dianhydride;
17. 2,2-bis(3,4-dicarboxyphenyl) propane dianhydride;
18. 1,1-bis(2,3-dicarboxyphenyl) ethane dianhydride;
19. 1,1-bis(3,4-dicarboxyphenyl) ethane dianhydride;
20. bis(2,3-dicarboxyphenyl) methane dianhydride;
21. bis(3,4-dicarboxyphenyl) methane dianhydride;
22. 4,4'-(hexafluoroisopropylidene) diphthalic anhydride
23. bis(3,4-dicarboxyphenyl) sulfoxide dianhydride;
24. tetrahydrofuran-2,3,4,5-tetracarboxylic dianhydride;
25. pyrazine-2,3,5,6-tetracarboxylic dianhydride;
26. thiophene-2,3,4,5-tetracarboxylic dianhydride;
27. phenanthrene-1,8,9,10-tetracarboxylic dianhydride;
28. perylene-3,4,9,10-tetracarboxylic dianhyd ride;
29. bis-1,3-isobenzofurandione;
30. bis-(3,4-dicarboxyphenyl) thioether dianhydride;
31. bicyclo-[2,2,2]-octen-(7)-2,3,5,6-tetracarboxylic-2,3,5,6-dianhydride;
32. 2-(3',4'-dicarboxyphenyl) 5,6-dicarboxybenzimidazole dianhydride;
33. 2-(3',4'-dicarboxyphenyl) 5,6-dicarboxybenzoxazole dianhydride;
34. 2-(3',4'-dicarboxyphenyl) 5,6-dicarboxybenzothiazole dianhydride;
35. bis (3,4-dicarboxyphenyl) 2,5-oxadiazole 1,3,4-dianhydride;
36. bis-2,5-(3',4'-dicarboxydiphenylether) 1,3,4-oxadiazole dianhydride;
37. their acid ester and acid halide ester derivatives;
and the like.

Representative dianhydrides which are particularly preferred in the present invention include pyromellitic dianhydride (PMDA), 4,4'-oxydiphthalic anhydride (ODPA), bis(3,4-dicarboxyphenyl) sulfone dianhydride, 2,2-bis(3,4-dicarboxyphenyl) 1,1,1,3,3,3,-hexafluoropropane dianhydride (6FDA), 2,2'-bis[4-(3,4-dicarboxyphenoxy)phenyl]propane dianhydride, 3,3',4,4'-benzophenonetetracarboxylic dianhydride (BTDA), bis(3,4-dicarboxyphenyl) sulfone dianhydride (DSDA), 2,2'-bis[4-(3,4-dicarboxyphenoxy)phenyl]propane dianhydride (BPADA) and 3,3',4,4'-biphenyltetracarboxylic dianhydride (BPDA).

Examples of suitable diamine monomers include:
1. 2,2 bis-(4-aminophenyl) propane;
2. 4,4'-diaminodiphenyl methane (MDA);
3. 4,4'-diaminodiphenyl sulfide;
4. 3,3'-diaminodiphenyl sulfone;
5. 4,4'-diaminodiphenyl sulfone;
6. 4,4'-diaminodiphenyl ether (4,4'-ODA);
7. 3,4'-diaminodiphenyl ether (3,4'-ODA);
8. 1,3-bis-(4-aminophenoxy) benzene (APB-134 or RODA);
9. 1,3-bis-(3-aminophenoxy) benzene (APB-133);
10. 1,2-bis-(4-aminophenoxy) benzene;
11. 1,2-bis-(3-aminophenoxy) benzene;
12. 1,4-bis-(4-aminophenoxy) benzene;
13. 1,4-bis-(3-aminophenoxy) benzene;
14. 1,5-diaminonaphthalene;
15. 2,2'-bis(trifluoromethyl)benzidine (TFMB);
16. 4,4'-diaminodiphenyldiethylsilane;
17. 4,4'-diaminodiphenylsilane;
18. 4,4'-diaminodiphenylethylphosphine oxide;
19. 4,4'-diaminodiphenyl-N-methyl amine;
20. 4,4'-diaminodiphenyl-N-phenyl amine;
21. 1,2-diaminobenzene (OPD);
22. 1,3-diaminobenzene (MPD);
23. 1,4-diaminobenzene (PPD);
24. 2,5-dimethyl-1,4-diaminobenzene;
25. 2,5-dimethyl-1,4-phenylenediamine (DPX);
26. trifluoromethyl-2,4-diaminobenzene;
27. trifluoromethyl-3,5-diaminobenzene;
28. 2,2-bis(4-aminophenyl) 1,1,1,3,3,3-hexafluoropropane (6F diamine)
29. 2,2-bis(3-aminophenyl) 1,1,1,3,3,3-hexafluoropropane;
30. benzidine;
31. 4,4'-diaminobenzophenone;
32. 3,4'-diaminobenzophenone;
33. 3,3'-diaminobenzophenone;
34. m-xylylene diamine;
35. p-xylylene diamine;
36. bisaminophenoxyphenylsulfone;
37. 4,4'-isopropylidenedianiline;
38. N,N-bis-(4-aminophenyl) methylamine;
39. N,N-bis-(4-aminophenyl) aniline
40. 3,3'-dimethyl-4,4'-diaminobiphenyl;
41. 4-aminophenyl-3-aminobenzoate;
42. 2,4-diaminotoluene;
43. 2,5-diaminotoluene;
44. 2,6-diaminotoluene;
45. 2,4-diamine-5-chlorotoluene;
46. 2,4-diamine-6-chlorotoluene;
47. 2,4-bis-(beta-amino-t-butyl) toluene;
48. bis-(p-beta-amino-t-butyl phenyl) ether;
49. p-bis-2-(2-methyl-4-aminopentyl) benzene;
50. 1-(4-aminophenoxy)-3-(3-aminophenoxy) benzene;
51. 1-(4-aminophenoxy)-4-(3-aminophenoxy) benzene;
52. 2,2-bis-[4-(4-aminophenoxy)phenyl] propane (BAPP);
53. bis-(4-(4-aminophenoxy)phenyl sulfone (BAPS);
54. 4,4'-bis(3-aminophenoxy)diphenylsulfone (m-BAPS);
55. 4,4'-bis-(aminophenoxy)biphenyl (BAPB);
56. bis(4-[4-aminophenoxy]phenyl) ether (BAPE);
57. 2,2'-bis-(4-phenoxy aniline) isopropylidene;
58. 2,4,6-trimethyl-1,3-diaminobenzene;
59. 4,4'-diamino-2,2'-trifluoromethyl diphenyloxide;
60. 3,3'-diamino-5,5'-trifluoromethyl diphenyloxide;
61. 4,4'-trifluoromethyl-2,2'-diaminobiphenyl;
62. 4,4'-oxy-bis-[(2-trifluoromethyl) benzene amine];
63. 4,4'-oxy-bis-[(3-trifluoromethyl) benzene amine];
64. 4,4'-thio-bis-[(2-trifluoromethyl) benzene-amine];
65. 4,4'-thiobis-[(3-trifluoromethyl) benzene amine];
66. 4,4'-sulfoxyl-bis-[(2-trifluoromethyl) benzene amine;
67. 4,4'-sulfoxyl-bis-[(3-trifluoromethyl) benzene amine];
68. 4,4'-keto-bis-[(2-trifluoromethyl) benzene amine];
69. and the like.

In one embodiment of the present invention, preferred aromatic diamines include 1,4-diaminobenzene (PPD), 1,3-diaminobenzene (MPD), 4,4'-diaminodiphenyl ether (4,4'-ODA), 3,4'-diaminodiphenyl ether (3,4'-ODA), 4,4'-diaminodiphenyl methane (MDA), 1,3-bis-(4-aminophenoxy) benzene (APB-134), 1,3-bis-(3-aminophenoxy) benzene (APB-133), 2,2-bis-[4-(4-aminophenoxy)phenyl] propane (BAPP), bis-(4-(4-aminophenoxy)phenyl sulfone (BAPS), 4,4'-bis(3-aminophenoxy)diphenylsulfone (m-BAPS), 4,4'-bis-(aminophenoxy)biphenyl (BAPB), bis(4-[4-aminophenoxy]phenyl) ether (BAPE), 2,2'-bis(trifluoromethyl)benzidine (TFMB), and 2,2-bis-(4-aminophenyl) 1,1,1,3,3-hexafluoro propane (6F diamine).

Aliphatic and cycloaliphatic diamines are also useful diamine monomers (typically as co-diamines since the use of too much aliphatic diamine may cause a small degradation of flame retardancy). Useful aliphatic diamines are 1,4-tetramethylenediamine, 1,5-pentamethylenediamine (PMD), 1,6-hexamethylenediamine (HMD), 1,7-heptamethylene diamine, 1,8-octamethylenediamine, 1,9-nonamethylenediamine, 1,10-decamethylenediamine (DMD), 1,11-undecamethylenediamine, 1,12-dodecamethylenediamine (DDD), 1,16-hexadecamethylenediamine. Useful cycloaliphatic diamines are para-amino cyclohexylmethane (PACM), isophorone diamine (IPD), and diaminocyclohexane (especially 1,4-diaminocyclohexane).

The diamines of the present invention may be used alone or in mixtures of two or more diamines. The diamines and the tetracarboxylic acid dianhydrides can be reacted by any conventional or non-conventional method to give a polyamic acid. Methods used to form polyamic acids are well known in the art and are not discussed herein.

### Flame-Retardant Additive

The flame-retardant additive component of the present invention may be a condensed phosphoric acid compound. These components are generally derived from a phosphorous containing component and a nitrogen-containing component.

Phosphorous-containing components used to derive the flame-retardant additives of the present invention include, but are not limited to, phosphoric acid, pyrophosphoric acid, polyphosphoric acid, phosphoric anhydride or the like.

Nitrogen-containing components used to derive the flame-retardant additives of the present invention include, but are not limited to, urea, melamine, dicyandiamide, biuret, cyanuric acid, isocyanuric acid, ammonia, ammonium carbonate, ammonium hydrogencarbonate, guanidine carbonate or the like.

The flame-retardant additive components of the present invention include, but are not limited to, the following substances:
1) ammonium polyphosphate,
2) polyphosphoric acid amide,
3) ammonium polyphosphoric acid amide,
4) melamine polyphosphate (e.g. Melapur200®),
5) melamine polyphosphate acid,
6) melamine-modified ammonium polyphosphate,
7) melamine-modified polyphosphoric acid amide,
8) melamine-modified ammonium polyphosphate,
9) melamine-modified ammonium polyphosphoric acid amide,
10) melamine-modified carbamyl polyphosphate,
11) carbamyl polyphosphate,
12) phosphoric acid-urea-dicyanamide-melamine reaction product,
13) phosphoric anhydride-urea-melamine-ammonium bicarbonate reaction product,
14) phosphoric anhydride-urea-melamine-ammonium bicarbonate-dicyanamide reaction product,
15) mixtures of aluminum salts of diethylphosphinate and melamine polyphosphate, (Exolit OP 1311® and OP 1312® produced by Clariant Inc.), and
16) combinations of two or more of the above.

In accordance with the present invention, the flame-retardant additives of the present invention are chosen primarily to make a thin-gauge polyimide film flame retardant; however, they are also chosen to allow for good dispersability into a particular solvated polyamic acid and/or solvent that is later injected and mixed with a solvated polyamic acid.

As used herein, "thin gauge polyimide film" is intended to mean a polyimide film that is free-standing and has a thickness between and including any two of the following numbers, 8.0, 9.0, 10.0, 12.0, 14.0, 16.0, 18.0, 19.0, 20.0, 22.0, 24.0, 26.0, 28.0, 30.0, 32.0, 34.0, 36.0, 38.0, 40.0, 42.0, 43.0, 44.0, and 45.0 microns. If films are produced below 8 microns in thickness, these films will not posses the required amount of dielectric strength to be useful as electrical insulators or thermal insulation materials. If films are produced greater than 45 microns in thickness, these films will either have sufficient flame retardancy on their own, without any need for an additive component, and will most likely be too heavy to be useful as lightweight thermal insulation in aircraft applications. In one embodiment of the present invention, the film thickness is between any two of the following numbers, 15.0, 16.0, 18.0, 19.0, 20.0, 22.0, 24.0, and 25.0 microns.

Generally speaking, the flame-retardant additives of the present invention are not soluble in the solvents commonly used to process polyamic acids into polyimide films. Hence, the flame-retardant additives of the present invention are typically selected in view of the particular solvent system used to form the polyimide film or to provide sufficient dispersability to be adequately intermixed with the polyimide precursor, or both.

Similarly, the flame-retardant additives of the present invention are selected primarily to provide the necessary flame retardancy of a thin gauge polyimide film. The flame-retardant thin-gauge polyimide films of the present invention are useful as thermal insulation in aircraft applications, these films comprising at least 85, 90, 91, 92, 93, 94, 95, 96, or 97 weight percent polyimide and at least 3, 4, 5, 6, 7, 8, 9, 10, 11, 12, 13, 14, or 15 weight percent flame-retardant additive material, a material having a nitrogen-containing condensed phosphoric acid compound.

At higher relative amounts of flame-retardant additive component (where B is greater than about 15), the thin gauge filled polyimide degrades the mechanical properties of the final (filled) flame-retardant polyimide material. At lower relative amounts of flame-retardant additive (where B is less than 3.0), the halogen-free, flame-retardant polyimide film becomes partially flammable to the degree that makes the film non-ideal for thermal insulation in aircraft applications.

Ordinary skill and experimentation may be necessary in practicing any particular embodiment of the present invention in order to find a suitable composition for particular end use applications.

Typically, the flame-retardant additives of the present invention generally sometimes require a high degree of mixing and/or filtration to prepare an adequate dispersion of the flame-retardant additive. However, if the additive is difficult to disperse (either in a solvent or directed into a particular polyamic acid) additional shearing force and/or filtration can be used to prepare an adequate dispersion. These flame retardant-additive solutions typically have from about 0.1, 0.2, 0.5, 0.7, 1.0, 2.0, 4.0, 5.0, 10.0, 12.0, 14.0, 15.0, 17.0, 18.0, 20.0, 22.0, 24.0, and 25.0 weight percent concentration flame retardant-additive in solvent and are dispersed to a level where the average particle size of the dispersion is between 0.1, 0.5, 1.0, 2.0, 3.0, 4.0, 5.0, 6.0 and 7.0 microns or in some cases, 20, 25, 30, 35, or 40 microns. Unwanted precipitates (agglomerates) or any significant degree of gelation of the flame-retardant additive is typically eliminated by either a filtration step, additional shearing force, or both.

Indeed in one embodiment of the present invention, the flame retardant-additive is easily dispersed at 20 weight percent in a (at least 99 weight percent pure) dimethylacetamide solvent and after the dispersion is prepared, the dispersion is kept stable under mild agitation at a temperature greater than 20°C.

### Flame-Retardant Additive: Polyimide Precursor Component.

Generally speaking, the flame-retardant additives useful in the present invention should be readily dispersible in a solvent commonly used to process polyimide precursor components. The more similar the polarity (or non-polarity) of the flame-retardant additive to the solvent, the more easily the additive will be dispersed. Hence, both the flame-retardant additive, the solvent and the particular polyamic acid should be selected to optimize the miscibility of each component in the other component while minimizing the amount of unwanted gelation (or precipitation) of the polyamic acid component or the flame-retardant additive component. Ordinary skill and experimentation may be necessary in optimizing the organic component for any particular solvent system selected.

Polar aprotic solvents are particularly useful in forming polyimides. Hence, the composite additives of the present invention are preferably designed to readily disperse in polar aprotic solvents, such as, N-methylpyrrolidinone (NMP), dimethylacetamide (DMAc), gamma-butyrolactone, N,N'-dimethyl-formamide (DMF), dimethyl sulfoxide (DMSO), and tetramethyl urea (TMU). In one embodiment of the present invention, the preferred solvent is dimethylacetamide (DMAc).

Co-solvents can also be used generally at about five to 50 weight percent of the total solvent. Useful co-solvents include xylene, toluene, benzene, diethyleneglycol diethyl ether, 1,2-dimethoxyethane (monoglyme), diethylene glycol dimethyl ether (diglyme), 1,2-bis-(2-methoxyethoxy) ethane (triglyme), bis [2-(2-methoxyethoxy) ethyl)] ether (tetraglyme), bis-(2-methoxyethyl) ether, tetrahydrofuran, propylene glycol methyl ether, propylene glycol methyl ether acetate, "Cellosolve™" (ethylene glycol ethyl ether), butyl "CellosolveT™" (ethylene glycol butyl ether), "Cellosolve™ acetate" (ethylene glycol ethyl ether acetate), and "butyl Cellosolve™ acetate" (ethylene glycol butyl ether acetate).

The flame-retardant film in accordance with the present invention can be produced by combining diamine and dianhydride monomers together, in the presence of a polar aprotic solvent, to form a polyamic acid solution (also called a polyamide acid solution). The dianhydride and diamine monomers are typically combined in a molar ratio of aromatic dianhydride monomer to aromatic diamine monomer of about 0.90 to 1.10, or about 0.98 to 1.02. Molecular weight of the polyamic acid can be adjusted by adjusting the molar ratio of the dianhydride and diamine monomers.

In one embodiment of the present invention, the polyamic acid solution contains polyamic acid dispersed in a polar aprotic solvent at a concentration in a range between (and including) any two of the following percentages: 5, 10, 12, 15, 20, 25, 27, 30, 40, 45 or 50 (%) percent by weight. In one embodiment of the present invention, the solvent content of the polyamic acid solution is in a range of from about 10, 12, 14, 16, 18, 20, or 22, to about 24, 26, 28 or 30 weight (%) percent solvent.

In one embodiment of the present invention, the flame-retardant additives in accordance with the present invention are first dispersed in a solvent in order to form a stable dispersion. This dispersion is then mixed with a polyamic acid solution (i.e., polyimide precursor) and the mixture is called a filled polyamic-acid casting solution. The concentration of the flame-retardant additive component to polyimide base matrix (i.e., in the final dry film) is typically in the range of about 3, 4, 5, 6, 7, 8, 9, 10, 11, 12, 13, 14 or 15 (%) percent by weight. As the concentration of the additive in the polyimide base matrix is increased, the flame-retardant properties of the composite polyimide also increases.

In one embodiment of the present invention, a flame-retardant additive solution is blended with a polyamic acid solution to form the filled polyamic-acid casting solution. This blending operation can include high-sheer mixing. Preferably, the additive dispersion is totally dispersed; however in some cases, additive precipitate may be present to a small degree. The dispersed particles may have a particle size in a range between and including any two of the following sizes: 0.1, 0.5, 1.0, 2.0, 3.0, 4.0, 5.0, 6.0 and 7.0 microns. In one embodiment of the present invention, the average particle size is from 1 to 2 microns.

The polyamic acid casting solution mentioned above can optionally further comprise additional additives, including processing aids (e.g., oligomers), antioxidants, light stabilizers, anti-static agents, heat stabilizers, ultraviolet absorbing agents, inorganic additives or various reinforcing agents. Common inorganic additives include the following: thermally conductive additives (like granular metal oxides) and electrically conductive additives like metals and electrically conductive polymers. Other common inorganic additives include granular alumina, granular silica, fumed silica, silicon carbide, diamond, clay, boron nitride, aluminum nitride, titanium dioxide, dicalcium phosphate, and fumed metal oxides. Common organic additives include polyaniline, polythiophene, polypyrrole, polyphenylenevinylene, polydialkylfluorenes, carbon black, and graphite.

In one embodiment of the present invention, the polyamic-acid casting solution is cast, or applied onto, a support such as an endless belt or rotating drum. A wet film then formed by heating the solution to remove some of the solvent. The wet film, sometimes called a 'green' film is converted into a self-supporting film by baking at an appropriate temperature where the solids are from 60, 65, 70, 75, 80, 85, and 90 weight percent. The green film is separated from the support, and stretched in a tentering oven, with continued thermal and radiation curing, to provide a fully cured polyimide film having a weight-percent solids value of above about 98.5%.

Other useful methods for producing polyimide films in accordance with the present invention can be found in U.S. Patent Nos. 5,166,308 and 5,298,331 and are incorporated by reference into this specification for all teachings therein. Numerous variations are also possible such as:
(a) A method wherein the diamine monomers and dianhydride monomers are preliminarily mixed together and then the mixture is added in portions to a solvent while stirring.
(b) A method wherein a solvent is added to a stirring mixture of diamine and dianhydride monomers (contrary to (a) above).
(c) A method wherein diamines are exclusively dispersed in a solvent and then dianhydrides are added thereto at such a ratio as allowing to control the reaction rate.
(d) A method wherein the dianhydride monomers are exclusively dispersed in a solvent and then amine components are added thereto at such a ratio to allow control of the reaction rate.
(e) A method wherein the diamine monomers and the dianhydride monomers are separately dispersed in solvents and then these solutions are mixed in a reactor.
(f) A method wherein the polyamic acid with excessive amine component and another polyamic acid with excessive anhydride component are preliminarily formed and then reacted with each other in a reactor, particularly in such a way as to create a non-random or block copolymer.
(g) A method wherein a specific portion of the amine components and dianhydride components are first reacted and then residual dianhydride monomer is reacted, or vice versa.
(h) A method wherein the flame-retardant additive are dispersed in a solvent and then injected into a stream of polyamic acid to form a filled polyamic acid casting solution and then cast to form a green film.
(i) A method wherein the components are added in part or in whole in any order to either part or whole of the solvent, also where part or all of any component can be added as a solution in part or all of the solvent.
(j) A method of first reacting one of the dianhydride monomers with one of the diamine monomers giving a first polyamic acid, then reacting the other dianhydride monomer with the other amine component to give a second polyamic acid, and then combining the amic acids in any one of a number of ways prior to film formation.

It is preferable to use a heating system having a plurality of heating sections or zones. It is also generally preferable that the maximum heating temperature be controlled to give a maximum air (or nitrogen) temperature of the ovens from about 200 to 600°C, more preferably from 350 to 500°C. By regulating the maximum curing temperature of the green film within the range as defined above, it is possible to obtain a polyimide film that has excellent mechanical strength, good electrical properties, and thermal dimensional stability.

Alternatively, heating temperatures can be set to 200-600°C while varying the heating time. Regarding the curing time, it is preferable that the polyimide films of the present invention be exposed to the maximum heating temperature for about 1, 2, 3, 5, 10, 15, 20, 25, 30, 35, 40, 45 or 50 seconds to about 60, 70, 80, 90, 100, 200, 400, 500, 700, 800, 900, 1000, 1100 or 1200 seconds. The heating temperature may be changed stepwise so as not to wrinkle the film by drying to quickly.

As used herein, the term 'flame-retardant polyimide' means a polyimide film possessing the physical property of being able to withstand a prolonged exposure to high temperature flame in accordance with the UL 94 Thin Material Vertical Burning Test for classifying resist coating materials as 94VTM-0, 94VTM-1 or 94VTM-2. The 94VTM-0 classification is the best rating, indicating significantly reduced flammability. Samples of film of the present invention were tested for flammability.

As used herein, the term 'elongation' is used to describe a film's ability to stretch under physical pulling force without breaking. In an elongation test, a film sample is placed between two holding clamps. The clamps are pulled in opposite directions. The distance the clamps are able to travel before the material breaks determines the amount of mechanical elongation present in the film. A higher elongation in a film allows the film to stretch more easily around a body in a thermal insulation application. Typically, a 0.70-mil thick polyimide film generally has an elongation of about 90 to 100 percent. In some cases mechanical elongation has been measured to be between 30, 40, 50, 60, 70, 80, 90, 100, 110, 120, and 130 percent.

In accordance with the present invention, the flame-retardant films herein are used in thermal insulation systems, commonly thermal insulation bags. These films are also used to impregnate laminated electrical insulation, thus providing superior electrical insulating systems. Additionally, multiple strands of conductive wires wrapped with such flame-retardant films are wound together to form turns and coils. In these applications, such novel coils have special utility in the construction of transformers and dynamoelectric machine rotor/stators.

In one embodiment of the present invention, the thin films described herein are used as a component of an aircraft thermal insulation system. The thin film is typically used as a reinforcing or covering film. In these commercial applications, designers require these materials to meet flammability tests in order to increase fire safety on aircraft. Special attention is paid to the prevention of onboard fire propagation and fuselage burn-through protection, if a post-crash fuel fire occurs.

In another embodiment of the present invention, the thin films described herein are used as a component of a laminate structure. These laminate structures typically employ the use of a thin metal foil. These metal foils are generally made of copper, nickel, chrome, nickel-chromium allows, aluminum, or other metals. These laminates are useful in making flexible circuits where the high-temperature thin-film polyimide is laminated to the metal foil at a temperature below 200 degrees C.

The high-temperature polyimide films of the present invention are generally classified as flame-resistant materials (i.e., materials that do not typically propagate flame and are not generally classified as a "fire fuel"). These films in many cases do not ignite spontaneously at extreme temperatures and can provide a substantial increase in fire resistance over some other insulation covering materials used by the aviation industry.

In one application (by Orcon® Corporation) of the films of the present invention, the films are used as a reinforcing covering film (e.g., Orcofilm® KN-201 and KN-202). These covering films are widely accepted as the material of choice for improving fire resistance of aircraft insulation. To provide fuselage burn-through protection, a combination of covering film and new fire-blocking materials, (e.g., Curlon® Orcobloc®) can be used. These combinations provide burn-through protection for as long as 10 minutes and in some cases, well over the 4-minute requirement proposed by the Federal Aviation Administration (FAA). A typical aircraft insulation system (i.e., an insulation "blanket") consists of one or more layers of fiberglass (or other insulation material) covered from both sides with a reinforced covering film (i.e., a film of the present invention).

Other beneficial properties of the films of the present invention include, but are not limited to, extreme temperature resistance, lightweight, have good mechanical durability, are non-flammable and flame-propagation resistant.

In other applications, the films of the present invention are excellent materials for use in space satellite products. Multilayer Insulation (MLI) blankets. For example, these films can be used to insulate a spacecraft against the heat of direct sunlight and solar radiation. Likewise, any application in which thin polyimides are used, or where a material having an improved flammability rating is desired, the films of the present invention are useful (e.g. thin-wire electrical insulation).

### EXAMPLES

Each sample was tested in Federal Aviation Administration (FAA) vertical burn tests where a 13" (long) x 1" (wide) sample is prepared and mounted on a frame, and then oriented in the vertical direction. A flame is set using a Bunsen bumer at the bottom end of the film and burning of the film is observed in the upwards direction against time (typically 12 seconds). The length of film burnt, measured in inches, was the value recorded for the test.

### EXAMPLE 1

Two grams of fine powder melamine polyphosphate (Melapur200®, obtained from Ciba Specialty Chemicals) was well dispersed, and uniformly mixed, using a laboratory scale Silverson® mixer in 100 grams of 20 weight percent polyamic acid solution derived from 4,4'-oxydianiline (4,4'-ODA) and pyromellitic dianhydride (PMDA) dissolved in DMAc. The viscosity of the polymer was 100 poise prior to mixing of the additive.

After thorough dispersion of the additive in the polyamic acid polymer, the viscosity of the mixed polymer was raised to 1000 poise by adding an additional amount of PMDA (dissolved in a 6 percent by weight solution).

Next, a thin sheet of mixed polymer was cast onto glass plate to form a wet film. The thickness of the wet film was adjusted in order to obtain a dry film thickness of about one mil (25 microns).

The glass plate was heated on a laboratory hot plate set at 100°C for 15 minutes. The film was peeled from the plate and placed on a pin frame where the edges of the film were bound.

Then, the pin-framed film was further heated to dry and imidize the film by raising the temperature from 120°C to 300°C at a rate of 5°C/minute. To adequately cure the film, the film was briefly exposed to 400°C for 5 minutes. The film measured 28 microns thick.

This final thin film contains approximately 10 percent by weight melamine polyphosphate (Melapur200®) in polyimide. The length of film burnt was about 0.5 inches.

### EXAMPLE 2

Three grams of fine powder melamine polyphosphate (Melapur200®, obtained from Ciba Specialty Chemicals) was well dispersed, and uniformly mixed, using a laboratory scale Silverson® mixer in 100 grams of 20 weight percent polyamic acid solution derived from 4,4'-oxydianiline (4,4'-ODA) and pyromellitic dianhydride (PMDA) dissolved in DMAc. The viscosity of the polymer was 100 poise prior to mixing of the additive.

After thorough dispersion of the additive in the polyamic acid polymer, the viscosity of the mixed polymer was raised to 1000 poise by adding an additional amount of PMDA (dissolved in a 6 percent by weight solution).

Next, a thin sheet of mixed polymer was cast onto glass plate to form a wet film. The thickness of the wet film was adjusted in order to obtain a dry film thickness of about one mil (25 microns).

The glass plate was heated on a laboratory hot plate set at 100°C for 15 minutes. The film was peeled from the plate and placed on a pin frame where the edges of the film were bound.

Then, the pin-framed film was further heated to dry and imidize the film by raising the temperature from 120°C to 300°C at a rate of 5°C/minute. To adequately cure the film, the film was briefly exposed to 400°C for 5 minutes. The film measured 25.7 microns in thickness.

This final thin film contains approximately 15 percent by weight melamine polyphosphate (Melapur200®) in polyimide. The length of film burnt was 0.5 inches.

### EXAMPLE 3

1.2 grams of fine powder melamine polyphosphate (Melapur®200, obtained from Ciba Specialty Chemicals) was well dispersed, and uniformly mixed, using a laboratory scale Silverson® mixer in 100 grams of 20 weight percent polyamic acid solution derived from 4,4'-oxydianiline (4,4'-ODA) and pyromellitic dianhydride (PMDA) dissolved in DMAc. The viscosity of the polymer was 100 poise prior to mixing of the additive.

After thorough dispersion of the additive in the polyamic acid polymer, the viscosity of the mixed polymer was raised to 1000 poise by adding an additional amount of PMDA (dissolved in a 6 percent by weight solution).

Next, a thin sheet of mixed polymer was cast onto glass plate to form a wet film. The thickness of the wet film was adjusted in order to obtain a dry film thickness of about one mil (25 microns).

The glass plate was heated on a laboratory hot plate set at 100°C for 15 minutes. The film was peeled from the plate and placed on a pin frame where the edges of the film were bound.

Then, the pin-framed film was further heated to dry and imidize the film by raising the temperature from 120°C to 300°C at a rate of 5°C/minute. To adequately cure the film, the film was briefly exposed to 400°C for 5 minutes. The film measured 17.8 microns in thickness.

This final thin film contains approximately 6 percent by weight melamine polyphosphate (Melapur200®) in polyimide. The length of film burnt was 1.0 inches.

### EXAMPLE 4

0.6 grams of fine powder melamine polyphosphate (Melapur200®, obtained from Ciba Specialty Chemicals) was well dispersed, and uniformly mixed, using a laboratory scale Silverson® mixer in 100 grams of 20 weight percent polyamic acid solution derived from 4,4'-oxydianiline (4,4'-ODA) and pyromellitic dianhydride (PMDA) dissolved in DMAc. The viscosity of the polymer was 100 poise prior to mixing of the additive.

After thorough dispersion of the additive in the polyamic acid polymer, the viscosity of the mixed polymer was raised to 1000 poise by adding an additional amount of PMDA (dissolved in a 6 percent by weight solution).

Next, a thin sheet of mixed polymer was cast onto glass plate to form a wet film. The thickness of the wet film was adjusted in order to obtain a dry film thickness of about one mil (25 microns).

The glass plate was heated on a laboratory hot plate set at 100°C for 15 minutes. The film was peeled from the plate and placed on a pin frame where the edges of the film were bound.

Then, the pin-framed film was further heated to dry and imidize the film by raising the temperature from 120°C to 300°C at a rate of 5°C/minute. To adequately cure the film, the film was briefly exposed to 400°C for 5 minutes. The film measured 22.9 microns in thickness.

This final thin film contains approximately 3 percent by weight melamine polyphosphate (Melapur200®) in polyimide. The length of film burnt was about 0.6 inches.

### EXAMPLE 5

Two grams of fine powder Exolit OP 1311® (by Clariant Inc.) was well dispersed, and uniformly mixed, using a laboratory scale Silverson® mixer in 100 grams of 20 weight percent polyamic acid solution derived from 4,4'-oxydianiline (4,4'-ODA) and pyromellitic dianhydride (PMDA) dissolved in DMAc. The viscosity of the polymer was 100 poise prior to mixing of the additive.

After thorough dispersion of the additive in the polyamic acid polymer, the viscosity of the mixed polymer was raised to 1000 poise by adding an additional amount of PMDA (dissolved in a 6 percent by weight solution).

Next, a thin sheet of mixed polymer was cast onto glass plate to form a wet film. The thickness of the wet film was adjusted in order to obtain a dry film thickness of about one mil (25 microns).

The glass plate was heated on a laboratory hot plate set at 100°C for 15 minutes. The film was peeled from the plate and placed on a pin frame where the edges of the film were bound.

Then pin-framed film was further heated to dry and imidize the film by raising the temperature from 120°C to 300°C at a rate of 5°C/minute. To adequately cure the film, the film was briefly exposed to 400°C for 5 minutes. The film measured 41 microns in thickness.

This final thin film contains approximately 10 percent by weight Exolit OP 1311® in polyimide. The length of film burnt was about 0.5 inches.

### COMPARATIVE EXAMPLE 1

100 grams of 20 weight percent polyamic acid solution derived from 4,4'-oxydianiline (4,4'-ODA) and pyromellitic dianhydride (PMDA) in DMAc was prepared having a viscosity of about 1000 poise.

Next, a thin sheet of mixed polymer was cast onto glass plate to form a wet film. The thickness of the wet film was adjusted in order to obtain a dry film thickness of about one mil (25 microns).

The glass plate was heated on a laboratory hot plate set at 100°C for 15 minutes. The film was peeled from the plate and placed on a pin frame where the edges of the film were bound.

Then, the pin-framed film was further heated to dry and imidize the film by raising the temperature from 120°C to 300°C at a rate of 5°C/minute. To adequately cure the film, the film was briefly exposed to 400°C for 5 minutes. This final thin film contained no flame-retardant additive per the present invention and was 25.4 microns in thickness. The length of film burnt was 13 inches.

### COMPARATIVE EXAMPLE 2

100 grams of 20 weight percent polyamic acid solution derived from 4,4'-oxydianiline (4,4'-ODA) and pyromellitic dianhydride (PMDA) in DMAc was prepared having a viscosity of about 1000 poise.

Next, a thin sheet of mixed polymer was cast onto glass plate to form a wet film. The thickness of the wet film was adjusted in order to obtain a dry film thickness of about one mil (25 microns).

The glass plate was heated on a laboratory hot plate set at 100°C for 15 minutes. The film was peeled from the plate and placed on a pin frame where the edges of the film were bound.

Then, the pin-framed film was further heated to dry and imidize the film by raising the temperature from 120°C to 300°C at a rate of 5°C/minute. To adequately cure the film, the film was briefly exposed to 400°C for 5 minutes. This final thin film contained no flame-retardant additive per the present invention and was 17.8 microns in thickness. The length of film burnt was about 13 inches.

## Claims

1. A flame-retardant film comprising:
A. a base polyimide matrix comprising at least 85, 90, 95, 96, or 97 weight percent of a polyimide polymer, the polyimide polymer having one or more imide moieties in the polymer backbone;
B. a flame-retardant additive dispersed in the base polyimide matrix in an amount (based upon the total weight of the flame retardant composite) in a range between and including any two of the following weight percentages: 3, 4, 5, 6, 7, 8, 9, 10, 11, 12, 13, 14, and 15,
C. wherein the film has a thickness between, and including, any two of the following numbers, 8.0, 9.0, 10.0, 12.0, 14.0, 16.0, 18.0, 19.0, 20.0, 22.0, 24.0, 26.0, 28.0, 30.0, 32.0, 34.0, 36.0, 38.0, 40.0, 42.0, 43.0, 44.0, and 45.0 microns.

2. A film in accordance with Claim 1, wherein the film is flame-retardant according to UL 94 Thin Material Vertical Burning Test 94VTM-0, UL 94 Thin Material Vertical Burning Test 94VTM-1 or UL 94 Thin Material Vertical Burning Test 94VTM-2.

3. A film in accordance with Claim 1, wherein the polyimide is a thermoset polyimide.

4. A film in accordance with Claim 1, wherein the polyimide is a thermoplastic polyimide.

5. A film in accordance with Claim 4, wherein the thermoplastic polyimide is useful in a laminate comprising the thermoplastic polyimide and a metal foil wherein the laminate is laminated at a temperature below 200 degrees C°.

6. A film in accordance with Claim 1, the composition being a portion of a thermal insulation system.

7. A film in accordance with Claim 1, the composition being a thermal insulation layer that is a portion of a thermal insulator bag.

8. A film in accordance with Claim 6, the thermal insulation layer being a portion of an aircraft fuselage.

9. A film in accordance with Claim 1, wherein the film is a layer of an electrical insulation system.

10. A film in accordance with Claim 1, wherein the film is used as part of multi-layer, or as single layer, wire wrap electrical insulation.

11. A film in accordance with Claim1, wherein the film is used in a multilayer insulation blanket in spacecraft.

12. A film in accordance with Claim 1, wherein the thickness of the film is between and including any two of the following numbers, 15.0, 16.0, 18.0, 19.0, 20.0, 22.0, 24.0, and 25.0 microns.

13. A film in accordance with Claim 1, wherein the polyimide is synthesized by:
A. forming in one or more steps, a polyamic acid solution having a solids content of between 5 and 50 percent by weight by contacting one or more dianhydrides with one or more diamines in the presence of a solvent;
B. combining the polyamic acid solution (in a reacted, partially reacted or unreacted form) in one or more steps with a flame retardant additive to form a mixed polymer; and
C. imidizing the mixed polymer to a thin polyimide film whereby at least a portion of the additive is uniformly dispersed within the film.

14. A film in accordance with Claim 1, wherein the polyimide is synthesized by:
A. forming a flame-retardant additive dispersion in a solvent wherein the average particle size of the additive is between and including and any two of the following numbers, 0.1, 0.5, 1.0, 2.0, 3.0, 4.0, 5.0, 6.0 and 7.0 microns,
B. mixing the additive dispersion with a polyamic acid solution to form mixed polymer,
C. casting the mixed polymer onto a flat surface to form a polyamic acid film, and
D. imidizing the polyamic acid film to a polyimide film having a solids content between at least 98 and 99.95 weight percent, and whereby the film has a thickness between and including any two of the following numbers: 8.0, 9.0, 10.0, 12.0, 14.0, 16.0, 18.0, 19.0, 20.0, 22.0, 24.0, 26.0, 28.0, 30.0, 32.0, 34.0, 36.0, 38.0, 40.0, 42.0, 43.0, 44.0, and 45.0 microns.

15. A film in accordance with Claim 1, wherein the polyimide is at least 85, 90, 91, 92, 93, 94, 95, 96, or 97 weight percent of the film, and wherein the flame retardant additive material having a nitrogen-containing condensed phosphoric acid compound is at least 3, 4, 5, 6, 7, 8, 9, 10, 11, 12, 13, 14, or 15 weight percent of the film.

16. A film in accordance with Claim 1, wherein the polyimide is at least 90, 91, 92, 93, 94, or 95 weight percent of the film, and wherein the flame retardant additive material having a nitrogen-containing condensed phosphoric acid compound is at least 5, 6, 7, 8, 9 or 10 weight percent of the film.

17. A film in accordance with Claim 1, wherein the flame retardant additive is selected from the group consisting of ammonium polyphosphate, polyphosphoric acid amide, ammonium polyphosphoric acid amide, melamine polyphosphate acid, melamine polyphosphate, melamine-modified ammonium polyphosphate, melamine-modified polyphosphoric acid amide, melamine-modified ammonium polyphosphate, melamine-modified ammonium polyphosphoric acid amide, melamine-modified carbamyl polyphosphate, carbamyl polyphosphate, phosphoric acid-urea-dicyanamide-melamine reaction product, phosphoric anhydride-urea-melamine-ammonium bicarbonate reaction product, phosphoric anhydride-urea-melamine-ammonium bicarbonate-dicyanamide reaction product, and combinations of at least two of the above.

18. A film in accordance with Claim 1, wherein the flame-retardant additive is selected from the group consisting of Exolit OP 1311® and Exolit OP 1312®.

19. A film in accordance with Claim 1, wherein the flame-retardant additive is selected from the group consisting of Melapur®200.

20. A film in accordance with Claim 1, having a mechanical elongation of between and including any two of the following numbers: 30, 40, 50, 60, 70, 80, 90, 100, 110, 120, and 130 percent.

21. A film in accordance with Claim 1, wherein the polyimide is derived at least in part from a diamine and a dianhydride and wherein the diamine is selected from a group consisting of 2,2 bis-(4-aminophenyl) propane, 4,4'-diaminodiphenyl methane, 4,4'-diaminodiphenyl sulfide, 3,3'-diaminodiphenyl sulfone, 4,4'-diaminodiphenyl sulfone, 4,4'-diaminodiphenyl methane (MDA), 4,4'-diaminodiphenyl ether, 3,4'-diaminodiphenyl ether, 1,3-bis-(4-aminophenoxy) benzene (APB-134), 1,3-bis-(3-aminophenoxy) benzene (APB-133), 1,2-bis-(4-aminophenoxy) benzene, 1,2-bis-(3-aminophenoxy) benzene, 1,4-bis-(4-aminophenoxy) benzene, 1,4-bis-(3-aminophenoxy) benzene, 1,5-diaminonaphthalene, 4,4'-diaminodiphenyldiethylsilane, 4,4'-diaminodiphenylsilane, 4,4'-diaminodiphenylethylphosphine oxide, 4,4'-diaminodiphenyl-N-methyl amine, 4,4'-diaminodiphenyl-N-phenyl amine, 1,2-diaminobenzene, 1,3-diaminobenzene, 1,4-diaminobenzene, 2,5-dimethyl-1,4-diaminobenzene, and 2,5-dimethyl-1,4-phenylenediamine.

22. A film in accordance with Claim 1, wherein the polyimide is derived from a diamine and a dianhydride and wherein the dianhydride is selected from a group consisting of pyromellitic dianhydride (PMDA), 3,3', 4,4'-biphenyl tetracarboxylic dianhydride (BPDA), 3,3',4,4'-benzophenone tetracarboxylic dianhydride (BTDA), 4,4'-oxydiphthalic dianhydride (ODPA), bis(3,4-dicarboxyphenyl) sulfoxide dianhydride (DSDA), 1,1,1,3,3,3,-hexafluoropropane dianhydride (6FDA), and 2,2'-bis[4-(3,4-dicarboxyphenoxy)phenyl]propane dianhydride (BPADA).
